# EUROPÄISCHE PATENTSCHRIFT

(11) **EP 0 695 901 B1**
(45) Veröffentlichungstag und Bekanntmachung des Hinweises auf die Patenterteilung: **04.11.1998**
(21) Anmeldenummer: 95112141.7
(22) Anmeldetag: 02.08.1995
(51) Int. Cl.: F16L 13/16, F16L 25/00, F16L 27/12

(54) **Verfahren zur Herstellung einer Rohrverbindung nach Art eines Schiebesitzes**
Method for making a pipe coupling of the insertable type
Procédé de réalisation d'un raccord de tuyaux du type emboîtable

(30) Priorität: 06.08.1994 DE 9412736 U
(43) Veröffentlichungstag der Anmeldung: 07.02.1996
(73) Patentinhaber: LEISTRITZ AG & CO. Abgastechnik, D-90765 Fürth (DE)
(72) Erfinder: Naubert, Ralph, D-92318 Neumarkt (DE); Schmelzer, Günter, D-90765 Fürth (DE)
(74) Vertreter: Tergau, Enno, Dipl.-Ing.

(56) Entgegenhaltungen:
- DE-A- 1 525 648
- DE-A- 1 915 846
- DE-A- 2 604 426
- GB-A- 951 617
- US-A- 3 208 136

## Beschreibung

Die Erfindung betriffl ein Verfahren zur Herstellung einer nach Art eines Schiebesitzes ausgebildeten Rohrverbindung. Eine Verbindung zwischen zwei Rohren kann ganz allgemein dadurch erfolgen, daß die Rohrenden Stoß an Stoß gesetzt und durch eine die beiden Rohrenden umfassende Manschette zusammengehalten werden, wobei die Manschette beispielsweise stoffschlüssig mit den Rohrenden verbunden ist. Üblich ist es auch, die miteinander zu verbindenden Rohrenden auf einen rohrabschnittförmigen Steckverbinder beidseitig aufzustecken und daran zu fixieren. Eine andere Möglichkeit besteht darin, die beiden Enden in eine Muffe einzusetzen und darin, etwa mittels einer Verschraubung zu fixieren. Es gibt jedoch Fälle, in denen die beiden Rohrenden nicht starr miteinander verbunden sein dürfen, sondern in Längsaxialrichtung gegeneinander verschiebbar sein müssen. Dies kann erforderlich sein, wenn eine Rohrverbindung bzw. die miteinander verbundenen Rohre einer wechselnden Temperaturbeaufschlagung ausgesetzt sind, wie etwa die Abgaskrümmer von Auspuffanlagen. Hier setzt sich das abgasseitig an den Zylinderkopf eines Motors angeflanschte Krümmerrohr aus einzelnen Rohrabschnitten zusammen, welche gegenseitig nach Art eines Schiebesitzes miteinander verbunden sind. Die während der Aufheiz- und während der Abkühlungsphase auftretenden Wärmebewegungen können dadurch ausgeglichen werden.

Bei der Herstellung solcher Rohrverbindungen mit Schiebesitz muß darauf geachtet werden, daß der Spaltraum zwischen den sich überlappenden Rohrenden, also zwischen dem äußeren und dem inneren Rohrende, ein genau vorbestimmtes Spaltmaß aufweist. Dieses Spaltmaß ist nämlich ausschlaggebend für die relative Beweglichkeit der Rohrenden. Ist dieses Spaltmaß zu eng gewählt, sind zur axialen Verschiebung der Rohrenden zu große Kräfte erforderlich. Mit anderen Worten, die Rohrenden sitzen so fest aufeinander, daß unter normalen Einsatzbedingungen eine Verschieblichkeit nicht gewährleistet ist. Andererseits ist auch ein zu großer Spaltraum schädlich. Zum einen gibt es Anwendungsfälle, wo eine gewisse Dichtheit der Rohrverbindung gefordert ist. Zum anderen besteht bei einem zu großen Spaltraum die Gefahr, daß die Rohrenden von ihrer gleichachsigen Ausrichtung abweichen und sich ineinander verklemmen. Die Herstellung von nach Art eines Schiebesitzes ausgebildeten Rohrverbindungen erfordert daher eine exakte Kalibrierung der Rohrenden. Dazu kann beispielsweise das eine Rohrende aufgeweitet und das andere verengt werden. Es ist aber auch möglich, beide Rohrenden aufzuweiten oder zu verengen. Entscheidend ist, daß im Endmontagezustand zwischen den teleskopartig ineinandergeschobenen Rohrenden ein Ringraum mit genau definiertem Spaltmaß vorhanden ist.

Nachteilig bei den bisherigen Kalibrierungsverfahren ist, daß herstellungsbedingte Abweichungen der Rohr-Wandstärke das vorbestimmte Spaltmaß des Ringraums zwischen den Rohrenden unkontrollierbar beeinflussen können. Weiterhin sind Rohre herstellungsbedingt nie exakt kreisrund. Es treten immer gewisse Abweichungen vom idealen Kreisquerschnitt auf. Die Folge ist, daß das Spaltmaß des Ringraums im Extremfall gegen Null tendieren kann und eine Verschiebbarkeit der Rohrenden nicht mehr oder nicht mehr in ausreichendem Maß gewährleistet ist.

Davon ausgehend ist es die Aufgabe der Erfindung, ein Verfahren zur Herstellung von nach Art eines Schiebesitzes ausgebildeten Rohrverbindungen vorzuschlagen, bei dem Kreisquerschnitts- und Wandstärkentoleranzen des Rohres keine Rolle mehr spielen bzw. vernachlässigbar sind.

Diese Aufgabe wird durch die Merkmale des Anspruches 1 gelöst. Die miteinander zu verbindenden Rohre werden danach gleichachsig so angeordnet, daß die Rohrenden sich überlappen. Das eine Rohrende ist dabei innerhalb des anderen Rohrendes angeordnet. Im folgenden wird daher von einem inneren und einem äußeren Rohrende gesprochen. Der Innendurchmesser des äußeren Rohrendes und der Außendurchmesser des inneren Rohrendes sind so gewählt, daß zwischen den beiden Rohrenden ein Ringraum vorhanden ist, in dem eine Zwischenschicht angeordnet ist. Die Dicke dieser Zwischenschicht ist dabei so gewählt, daß sie mindestens so groß ist, wie es dem Spaltmaß des Ringraumes im späteren Fertigstellungszustand entspricht. Diese Anordnung kann dadurch erreicht werden, daß die beispielsweise in Form eines Ringes ausgebildete Zwischenschicht auf das Rohrende des einen Rohrendes aufgeschoben oder auf sonstige Art und Weise aufgebracht wird. Dieses Rohrende ist das spätere innere Rohrende.

Das zweite Rohrende wird in üblicher Weise, etwa mit einem Spreizdorn oder hydrostatisch aufgeweitet und über das mit der Zwischenschicht versehene innere Rohrende gesteckt. Bei der Aufweitung kommt es auf die Einhaltung eines exakten Aufweitungsmaßes nicht an. Sie muß nur derart sein, daß das innere Rohrende mit seiner Zwischenschicht darin Platz findet. Mit anderen Worten, das Spaltmaß des Ringraumes in diesem Vor-Montagezustand der Rohrverbindung ist größer als im späteren Fertigstellungszustand.

Als nächster Schritt erfolgt die gemeinsame Kalibrierung des Überlappungsbereiches der Rohrenden. Dazu wird entweder das innere Rohrende aufgeweitet oder das äußere Rohrende verengt. Durch die zwischen den beiden Rohrenden angeordnete Zwischenschicht kann ein exaktes Spaltmaß des Zwischenraums zwischen den Rohrenden auf einfachste Art eingehalten werden. Durch die quasi als Formkern wirkende Zwischenschicht wird in jedem Falle ein Ringraum mit definiertem Spaltmaß freigehalten. Eine evtl. Ovalität der Rohrenden stört ebenfalls nicht, da am Ende des Verformungsprozesses das jeweils verformte Rohrende der Querschnittsform des anderen Rohrendes angepaßt ist. Die Verformung wird vorzugsweise so durchgeführt, daß sowohl bei einer Aufweitung des inneren Rohrendes als auch bei einer Verengung des äußeren Rohrendes jeweils das andere Rohrende in der gleichen Richtung mitverformt wird. Es hat sich nämlich gezeigt, daß dadurch das vorbestimmte Spaltmaß noch besser und genauer eingehalten werden kann. Da beim Kalibrieren beide Rohrenden in gleicher Weise verformbar sind, ist es mit dem erfindungsmäßigen Verfahren auch möglich, nicht rotations-symmetrische Querschnitte durch das Kalibrieren vorher rotationssymmetrischer, vorzugsweise runder Rohrquerschnitte zu erzeugen. Die Rohrenden können im Bereich des mit Hilfe der Erfindung realisierbaren Schiebesitzes folglich beliebige, freie Formen erhalten.

Die Zwischenschicht kann prinzipiell aus einem beliebigen Material bestehen, sofern dieses der Krafteinwirkung bei der Kalibrierung standhält. Ein Material, das dies gewährleistet, wäre etwa ein metallisches Material. Vorzugsweise sollte das verwendete Metall eine größere Härte aufweisen als das Material der Rohre. Es sind aber auch andere Materialien, wie Kunststoffe denkbar. Bei Kunststoffen ist zu berücksichtigen, daß diese in gewissem Maße elastisch verformbar sind. Diese Verformbarkeit kann dadurch berücksichtigt werden, daß die Zwischenschicht eine größere Dicke aufweist, als dies dem späteren Spaltmaß im Fertigstellungszustand entspricht.

Erfindungswesentlich ist, daß die Zwischenschicht nicht in dem Ringraum bleibt, sondern nach der gemeinsamen Kalibrierung daraus enffernt wird. Die Enffernung der Zwischenschicht kann auf verschiedene Art und Weise erfolgen. So ist es denkbar, daß die Zwischenschicht aus dem Ringraum herausgezogen oder - etwa durch Anwendung von Druckluft - herausgeschoben oder -gedrückt wird. Eine andere vorteilhafte Art der Enffernung der Zwischenschicht ist es, sie aus einem Material herzustellen, das nach der Kalibrierung in einen flüssigen oder einen gas- oder dampfförmigen Verflüchtigungszustand übergeht oder überführbar ist. Die gebildeten dampf- oder gasförmigen Stoffe stören das Aneinandergleiten der miteinander zusammenwirkenden Flächen des Schiebesitzes von Hause aus nicht. Dies ist auch bei einer Flüssigkeit in der Regel der Fall. Wenn eine Flüssigkeit im Ringraum unerwünscht ist, kann sie etwa mit Hilfe von Druckluft oder Wärmeeinwirkung daraus enffernt werden. Bei Schiebesitzen, die bei Raumtemperatur eingesetzt werden, erfolgt der Übergang in den Verflüchtigungszustand vorzugsweise bei Raumtemperatur. Es ist dann keine Erwärmung zur Verflüchtigung der Zwischenschicht notwendig. Geeignete Stoffe sind etwa Eis oder Trokkeneis. Der durch Unterkühlung hergestellte und bei Raumtemperatur metastabile feste Aggregatszustand geht selbständig nach der Kalibrierung verloren, indem sich in einem Fall Wasser und in dem anderen Fall Kohlendioxid bildet. Der Übergang in den Verflüchtigungszustand kann aber auch durch eine Wärmezufuhr bewirkt sein. Es können dann Stoffe für die Zwischenschicht Verwendung finden, die bei Raumtemperatur praktisch unbegrenzt lagerfähig sind. Nach einer bevorzugten Ausführungsform des erfindungsgemäßen Verfahrens besteht die Zwischenschicht aus einem rückstandsfrei verbrennbaren Material. Ein solches Material wird durch Wärmezufuhr auf seine Entzündungstemperatur erhitzt. Es geht durch einen Verbrennungsvorgang in den genannten Verflüchtigungszustand über. Vorzugsweise wird als Zwischenschichtmaterial Polyethylen eingesetzt. Es verbrennt praktisch rückstandsfrei zu Kohlendioxid und Wasser. Besonders vorteilhaft ist die Verwendung eines solchen Materials, wenn es sich um Rohrverbindungen handelt, die ohnehin bei oberhalb der Entzündungstemperatur des Materials liegenden Temperaturen eingesetzt werden. Ein solcher Anwendungsfall sind die Abgaskrümmer für Auspuffanlagen von Verbrennungsmotoren.

Eine vorteilhafte Ausgestaltung der Zwischenschicht besteht darin, daß sie an ihren in Axialrichtung weisenden Stirnenden wenigstens einen ersten und einen zweiten Anschlag aufweist. Der erste Anschlag springt dabei radial nach innen vor und wirkt mit der Stirnseite des inneren Rohrendes zusammen. Dadurch ist zunächst die Montage des Zwischenringes auf dem inneren Rohrende erleichtert. Der Zwischenring wird ganz einfach soweit aufgeschoben, bis sein nach innen vorspringender Anschlag an der Stirnseite des inneren Rohrendes anliegt. Der zweite Anschlag ist an dem gegenüberliegenden Ende der Zwischenschicht angeordnet und springt nach außen vor. Dieser Anschlag wirkt mit der Stirnseite des auf die Zwischenschicht aufzusteckenden äußeren Rohrendes zusammen. Dadurch ist die Aufsteckbewegung des äußeren Rohrendes begrenzt und der Überlappungsbereich der beiden Rohrenden festgelegt. Ein Weiterschieben des äußeren Rohres wird somit durch das Zusammenwirken des ersten und des zweiten Anschlages wirkungsvoll verhindert.

Die Zwischenschicht ist in vorteilhafter Weise dadurch weitergebildet, daß an ihrem von dem äußeren Rohrende wegweisenden Ende wenigstens ein über den Außenumfang des äußeren Rohrendes hinausstehender Abstandshalter angeordnet ist. Wenn die erfindungsgemäße Rohrverbindung nach ihrer Fertigstellung mit einer Ummantelung versehen werden soll, dient dieser Abstandshalter als Zentrierhilfe und gewährleistet einen genau definierten Abstand zwischen Ummantelung und den darin angeordneten Rohren. Eine solche Ummantelung ist beispielsweise bei einem luftspaltisolierten Abgaskrümmer vorhanden. In einem solchen Fall ist die Verwendung eines Materials, das in einen flüssigen oder gas- oder dampfförmigen Zustand überführbar ist, besonders vorteilhaft. Zweckmäßigerweise ist der Abstandshalter von dem zweiten Anschlag gebildet. Der zweite Anschlag erfüllt damit eine Doppelfunktion.

Bei Baugruppen mit mehreren Schiebesitzen, beispielsweise bei Abgaskrümmern, ist es mit der Erfindung in vorteilhafter Weise möglich, sämtliche Schiebesitze der Baugruppe gleichzeitig mit einem Hub zu kalibrieren. Mit der Erfindung ist es also möglich, die Fertigungszeiten erheblich abzusenken. Das gleichzeitige Kalibrieren sämtlicher Schiebesitze an einer Baugruppe hat auch den Vorteil, daß beim innerbetrieblichen Handling der Baugruppe nicht sämtliche Einzelteile weiterbehandelt werden müssen, sondern die Baugruppe als Ganzes weitergehandelt werden kann.

Die Erfindung wird nun anhand der in den Zeichnungen dargestellten Ausführungsbeispiele näher erläutert. Es zeigen:
- Fig.1: Eine mit dem erfindungsgemäßen Verfahren hergestellte Rohrverbindung in Längsschnittdarstellung, bei der sich die Zwischenschicht noch im Ringraum befindet,
- Fig.2: eine fertige Rohrverbindung,
- Fig.3: eine Rohrverbindung gemäß Fig.1 mit einer abgewandelten Zwischenschicht,
- Fig.4: einen Abgaskrümmer mit mehreren Schiebesitzen im Vormontagezustand.

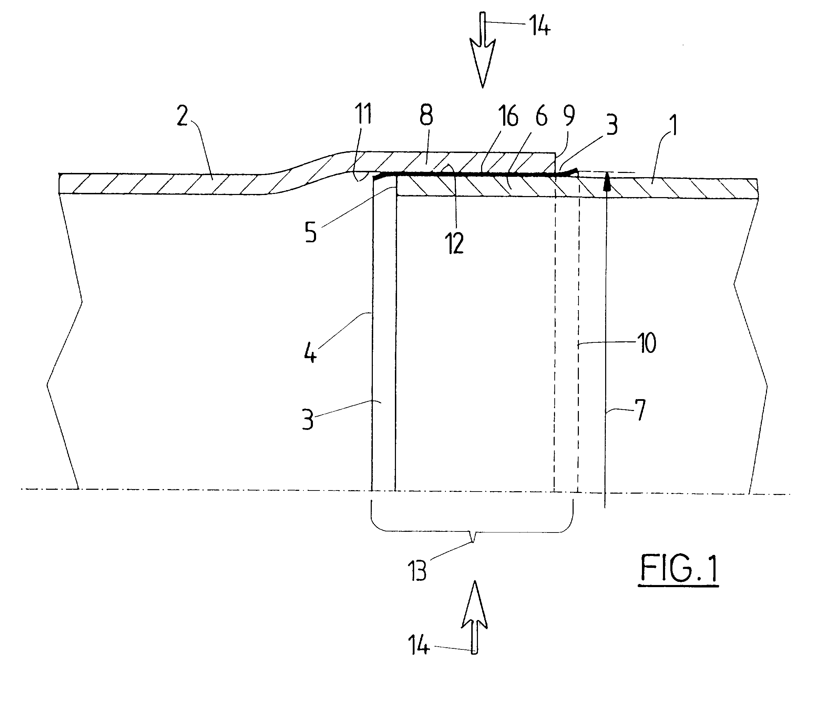

Zur erfindungsgemäßen Herstellung von Rohrverbindungen mit Schiebesitzen werden zunächst handelsübliche Stahlrohre 1, 2 bereitgestellt. Die Rohre haben beispielsweise einen Außendurchmesser von 5 cm und eine Wandstärke von 1 mm. Auf das Ende des einen Rohres 1 wird eine ringförmige Zwischenschicht 3 aus Polyethylen aufgeschoben. Im Montagezustand ist die Stirnfläche 4 der Zwischenschicht mit Abstand vor der Stirnfläche 5 des Rohres 1 angeordnet. Das Rohrende des Rohres 1 bildet das innere Rohrende 6. Ein zweites Rohr 2 wird soweit aufgeweitet, daß sein Innendurchmesser etwas größer ist als der Außendurchmesser 7 (Fig.1) des mit der Zwischenschicht versehenen Rohrendes 6. Das Rohrende des Rohres 2, das im Montagezustand das innere Rohrende 6 umgreift, also das äußere Rohrende 8, ist so angeordnet, daß die Zwischenschicht 3 über seine Stirnfläche 9 hinausragt. Die Stirnfläche 10 der Zwischenschicht ist also mit Abstand vor der Stirnfläche 9 des Rohrendes 8 angeordnet.

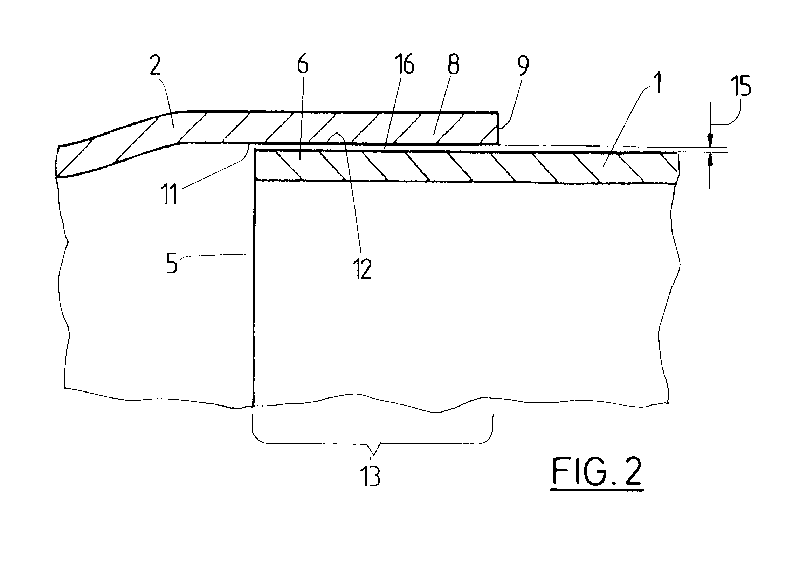

Als nächster Verfahrensschritt wird der Überlappungsbereich 13 der miteinander verbundenen Rohre 1, 2 gemeinsam kalibriert. Dazu wird das Rohrende 8 in Richtung der Pfeile 14 mit einem Backenwerkzeug (nicht dargestellt) beaufschlagt. Das Backenwerkzeug umfaßt mehrere Backen mit jeweils einer Formausmuldung. Im geschlossenen Zustand bilden die beiden Formausmuldungen einen Formhohlraum, dessen Querschnittsform der Außen-Umrißform des Überlappungsbereiches 13 bzw. des Rohrendes 8 im Fertigstellungszustand entspricht. Das Ergebnis des Kalibriervorganges ist in Fig.1 dargestellt. Beim Kalibriervorgang wird das äußere Rohrende 8 mit seiner Innenumfangsfläche 11 an die Zwischenschicht 3 gepreßt und bleibend verformt. Zwischen den Rohrenden 6 und 8 wird dabei durch die Zwischenschicht 3 ein Ringraum 16 mit einem der Dikke der Zwischenschicht entsprechenden Spaltraum 15 (Fig.2) freigehalten.

Vorteilhaft ist es, wenn bei der Kalibrierung auch das innere Rohrende 6 in einem gewissen Ausmaß mit verformt wird. Das vorbestimmte Spaltmaß 15 des Ringraums 16 läßt sich dann besonders genau einhalten. Eine solche Verengung auch des inneren Rohrendes 6 ist in Fig.1 und 2 aus zeichnerischen Gründen nicht dargestellt.

Die aus Polyethylen bestehende Zwischenschicht 3 verformt sich unter der Einwirkung der Kalibrierungskräfte in gewissem Ausmaß. Es kommt zu einer Materialverdrängung in Richtung der Stirnflächen 5 und 9 der Rohrenden. Die dadurch bedingte Verringerung der Dicke der Zwischenschicht 3 kann dadurch kompensiert werden, daß von vornherein eine Zwischenschicht eingesetzt wird, die eine etwas größere Dicke aufweist, als dies dem Spaltmaß 15 des Ringraumes 16 im späteren Fertigstellungszustand entspricht.

Der nächste Verfahrensschritt, nämlich das Entfernen der Zwischenschicht erfolgt nicht direkt im Anschluß an die Kalibrierung, sondern später, während des Einsatzes der erfindungsgemäßen Rohrverbindung. Sie ist nämlich für einen Temperaturbereich vorgesehen, bei dem das für die Zwischenschicht 3 verwendete Polyethylen rückstandslos verbrennt. Dieser Zustand ist in Fig.2 angedeutet. Die Zwischenschicht 3 ist vollständig aus dem Ringraum 16 enffernt. In dem Ringraum 16 sind keine Rückstände der Zwischenschicht mehr vorhanden, die eine Schiebeführung der aneinander zugewandten Flächen, nämlich der Innenumfangsfläche 11 des äußeren Rohrendes und der Außenumfangsfläche 12 des inneren Rohrendes 6 behindern könnten. In dem in Fig.2 dargestellten Zustand beträgt das Spaltmaß 15 etwa 0,2 bis 0,3 mm.

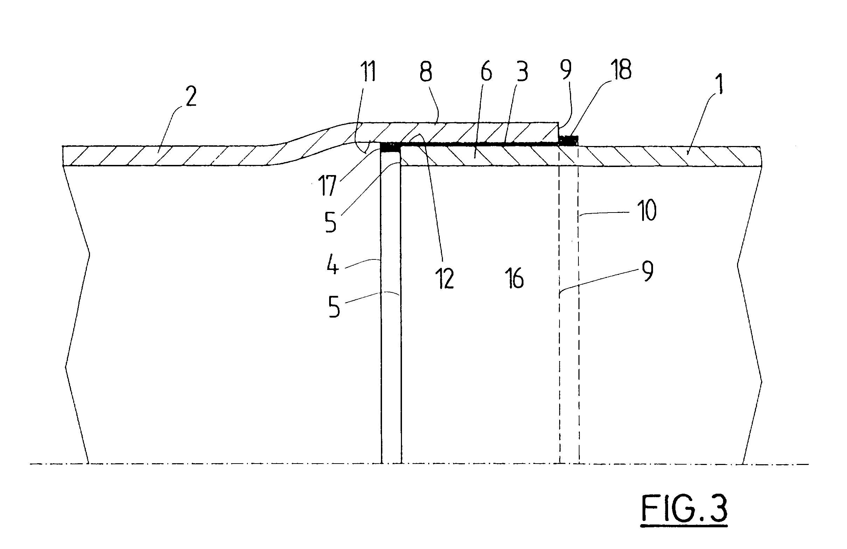

Die in Fig.3 dargestellte Zwischenschicht unterscheidet sich von jener nach Fig.1 dadurch, daß an ihrem über die Stirnfläche 5 des Rohrendes 6 hinausstehenden Ende ein radial nach innen vorspringender Anschlag 17 angeformt ist. Am anderen Ende der Zwischenschicht 3 ist ein radial nach außen vorspringender Anschlag 18 angeformt. Diese Anschläge dienen als Montagehilfe. Beim Aufschieben der Zwischenschicht auf das innere Rohrende 6 wirkt der Anschlag 17 mit der Stirnfläche 5 des Rohres 1 zusammen und begrenzt die Aufsteckbewegung. Der Anschlag 18 wirkt mit der Stirnfläche 9 des Rohres 2 zusammen und begrenzt die Aufsteckbewegung des Rohres 2 bei der Herstellung des Vormontagezustands, etwa entsprechend Fig.3.

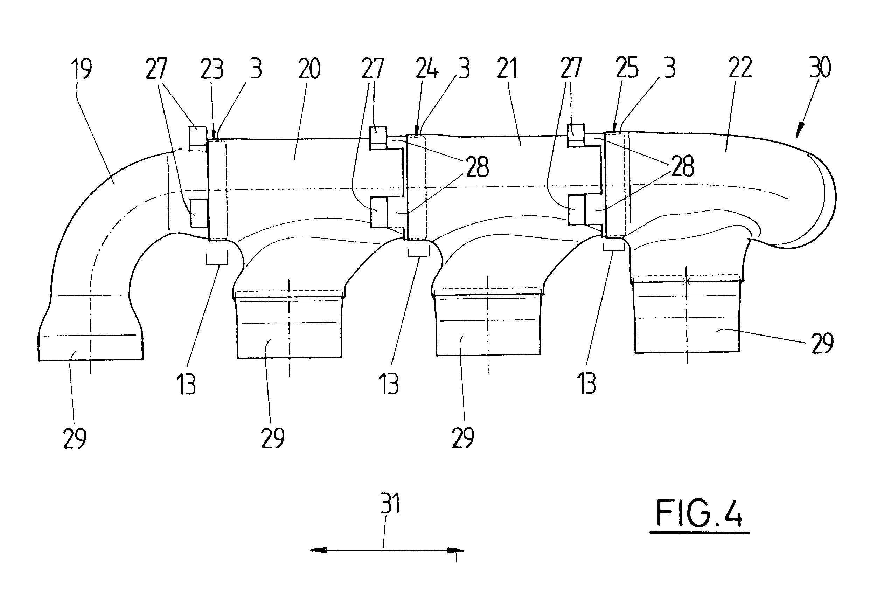

In Fig.4 ist das Ableitungsrohr 30 eines Abgaskrümmers für den Verbrennungsmotor eines Kraftfahrzeuges dargestellt. Er setzt sich aus insgesamt vier erfindungsgemäß miteinander verbundenen Rohrabschnitten 19,20,21,22 zusammen. Insgesamt sind also drei Rohrverbindungen 23,24,25 vorhanden. Die Zwischenschicht 3 dieser Rohrverbindungen weist an ihrem aus dem Überlappungsbereich 13 herausragenden Ende 3 gleichmäßig über ihren Umfang verteilte Abstandshalter 27 auf. Die Abstandshalter dienen als Zentrierhilfe bei der Anordnung des Ableitungsrohres 30 innerhalb einer Ummantelung (nicht dargestellt). Die Abstandshalter 27 der Rohrverbindungen 23 und 24 sind über einen Verbindungssteg 28 an die Zwischenschicht 3 angeformt. Die Abstandshalter 27 können auch in Form umlaufender Ringvorsprünge ausgebildet sein. Eine anders gestaltete Zwischenschicht ist bei der Rohrverbindung 23 exemplarisch dargestellt. Die Abstandshalter sind direkt, also ohne Verbindungssteg, an die Zwischenschicht angeformt. Sie dienen hier gleichzeitig als Anschlag zur Begrenzung der Aufsteckbewegung des Rohrabschnittes 20 bei der Vormontage der Rohrverbindung 23. Die Rohrabschnitte 19,20,21,22 weisen jeweils einen zur gleichen Seite hin abstehenden Anschlußstutzen 29 auf.

Die Anschlußstutzen 29 dienen zur abgasseitigen Montage am Motorblock eines Fahrzeugmotors. Wenn das Ableitungsrohr 30 von den heißen Abgasen durchströmt wird, verbrennt die Zwischenschicht 3 rückstandsfrei. Die Rohrabschnitte 19,20,21,22 dehnen sich in Betrieb in Richtung des Doppelpfeiles 31 aus. Diese Ausdehnung würde ohne das Vorhandensein von nach Art von Schiebesitzen ausgebildeten Rohrverbindungen zu einer Spannung innerhalb des Ableitungsrohres 30 und nach häufigen Temperaturwechseln letztlich zu dessen Zerstörung führen. Aufgrund der Schiebesitze können die einzelnen Rohrabschnitte in den Überlappungsbereichen 13 gegeneinander verschoben werden, so daß die Wärmeausdehnungen ausgeglichen werden können. Dadurch, daß die Zwischenschicht 3 rückstandsfrei verbrennt, wird die Relativbewegung der Rohrabschnitte nicht behindert.

### Bezugszeichenliste

- 1: Rohr
- 2: Rohr
- 3: Zwischenschicht
- 4: Stirnfläche
- 5: Stirnfläche
- 6: Inneres Rohrende
- 7: Außendurchmesser
- 8: äußeres Rohrende
- 9: Stirnfläche
- 10: Stirnfläche
- 11: Innenumfangsfläche
- 12: Außenumfangsfläche
- 13: Überlappungsbereich
- 14: Pfeil
- 15: Spaltmaß
- 16: Ringraum
- 17: Anschlag
- 18: Anschlag
- 19: Rohrabschnitt
- 20: Rohrabschnitt
- 21: Rohrabschnitt
- 22: Rohrabschnitt
- 23: Rohrverbindung
- 24: Rohrverbindung
- 25: Rohrverbvindung
- 27: Abstandshalter
- 28: Verbindungssteg
- 29: Anschlußstutzen
- 30: Ableitungsrohr
- 31: Doppelpfeil

## Patentansprüche

1. Verfahren zum Herstellen einer Rohrverbindung nach Art eines Schiebesitzes mit folgenden Schritten:
a) Bereitstellen von mehreren Rohren (1,2),
b) gleichachsiges Anordnen der jeweils miteinander zu verbindenden Rohrenden derart,
- daß die Rohrenden sich überlappen, wobei das eine Rohrende als inneres Rohrende (6) im anderen, äußeren Rohrende (8) einliegt, und
- daß in einem sich zwischen innerem und äußerem Rohrende befindlichen Ringraum (16) eine Zwischenschicht (3) angeordnet ist, welche zumindest eine dem Spaltmaß (15) des Ringraumes (16) im späteren Fertigstellungszustand der Rohrverbindung entsprechende Dicke aufweist,
c) gemeinsame Kalibrierung der sich überlappenden Rohrenden auf ein einem Schiebesitz entsprechendes Spaltmaß (15) des Ringraumes (16),
d) Entfernen der Zwischenschicht (3).

2. Verfahren nach Anspruch 1,
dadurch gekennzeichnet,
daß die Zwischenschicht (3) aus dem Ringraum (16) herausgezogen oder -geschoben wird.

3. Verfahren nach Anspruch 2,
dadurch gekennzeichnet,
daß die Zwischenschicht (3) aus Metall besteht.

4. Verfahren nach Anspruch 1,
gekennzeichnet durch
ein Entfernen der Zwischenschicht (3) derart, daß sie aus einem Material besteht, das nach der Kalibrierung in einen flüssigen oder gas- oder dampfförmigen Verflüchtigungszustand übergeht oder überführbar ist.

5. Verfahren nach Anspruch 4,
dadurch gekennzeichnet,
daß der Übergang in den Verflüchtigungszustand bei Raumtemperatur erfolgt.

6. Verfahren nach Anspruch 4,
dadurch gekennzeichnet,
daß der Übergang in den Verflüchtigungszustand durch Wärmezufuhr bewirkt ist.

7. Verfahren nach Anspruch 6,
dadurch gekennzeichnet,
daß die Zwischenschicht (3) aus einem rückstandsfrei verbrennbarem Material besteht, das durch Wärmezufuhr auf seine Entzündungstemperatur erhitzt wird.

8. Verfahren nach Anspruch 7,
dadurch gekennzeichnet,
daß die Zwischenschicht aus Polyethylen besteht.

9. Verfahren nach einem der Ansprüche 1-8,
dadurch gekennzeichnet,
daß die Zwischenschicht an ihren in Axialrichtung weisenden Stirnflächen (4,10) wenigstens einen ersten, radial nach innen vorspringenden Anschlag (17) und wenigstens einen zweiten radial nach außen vorspringenden Anschlag (18) aufweist, wobei der erste Anschlag (17) mit der Stirnfläche (5) des inneren Rohrendes (6) und der zweite Anschlag (18) mit der Stirnfläche (9) des äußeren Rohrendes (8) zusammenwirkt.

10. Verfahren nach einem der Ansprüche 1-9,
dadurch gekennzeichnet,
daß die Zwischenschicht (3) an ihrer Außenseite wenigstens einen über den Außenumfang des äußeren Rohrendes (8) hinausstehenden Abstandshalter (19) aufweist.

11. Verfahren nach Anspruch 10,
dadurch gekennzeichnet,
daß der Abstandshalter (19) von dem zweiten Anschlag (18) gebildet ist.

12. Verfahren nach einem der Ansprüche 1-11,
dadurch gekennzeichnet,
daß bei der gemeinsamen Kalibrierung durch Aufweitung des inneren Rohrendes (6) oder Verengung des äußeren Rohrendes (8) das jeweils andere Rohrende in der gleichen Richtung mitverformt wird.

## Claims

1. A method for making a pipe coupling in the manner of a sliding fit with the following steps:
a) providing several pipes (1, 2),
b) coaxially arranging the pipe ends to be respectively joined together, in such a way
- that the pipe ends overlap, in which arrangement one pipe end lies as the inner pipe end (6) in the other outer pipe end (8), and
- that an intermediate layer (3) is arranged in an annular space (16) situated between the inner and outer pipe end, which layer has at least a thickness corresponding to the gap dimension (15) of the annular space (16) in the subsequent completed state of the pipe joint,
c) jointly calibrating the overlapping pipe ends to a gap dimension (15) of the annular space (16), corresponding to a sliding fit,
d) removing the intermediate layer (3).

2. A method according to claim 1,
characterized in that the intermediate layer (3) is pulled or pushed out of the annular space (16).

3. A method according to claim 2,
characterized in that
the intermediate layer (3) consists of metal.

4. A method according to claim 1,
characterized by
a removal of the intermediate layer (3) in such a way that it consists of a material which after calibration, passes, or can be transformed, into a liquid or gaseous or vaporous volatilization state.

5. A method according to claim 4,
characterized in that
the transition into the volatilization state occurs at room temperature.

6. A method according to claim 4,
characterized in that
the transition into the volatilization state is produced by the addition of heat.

7. A method according to claim 6,
characterized in that
the intermediate layer (3) consists of a material combustible without any residues, which is heated to its ignition temperature by the addition of heat.

8. A method according to claim 7,
characterized in that
the intermediate layer consists of polyethylene.

9. A method according to one of claims 1 to 8,
characterized in that
the intermediate layer has at its end faces (4, 10) pointing in the axial direction, at least one first stop (17) projecting radially towards the inside, and at least one second stop (18) projecting radially towards the outside, in which arrangement, the first stop (17) cooperates with the end face (5) of the inner pipe end (6) and the second stop (18) cooperates with the end face (9) of the outer pipe end (8).

10. A method according to one of claims 1 to 19,
characterized in that
the intermediate layer (3) has on its outer side at least one spacer (19) projecting beyond the outer circumference of the outer pipe end (8).

11. A method according to claim 10,
characterized in that
the spacer (19) is formed by the second stop (18).

12. A method according to one of claims 1 to 11,
characterized in that
in the common calibration by enlarging the inner pipe end (6) or contracting the outer pipe end (8), the respective other pipe end is deformed as well in the same direction.

## Revendications

1. Procédé de réalisation d'un raccord de tuyaux, du type emboîtable, présentant les étapes ci-après :
a) préparation de plusieurs tuyaux (1,2),
b) placement coaxial des extrémités de tuyau devant chaque fois être reliées ensemble, de manière que
- les extrémités de tuyaux se chevauchent, une extrémité de tuyau s'insérant, à titre d'extrémité de tuyau intérieur (6), dans l'autre, l'extrémité de tuyau extérieur (8), et
- dans un espace annulaire (16), se trouvant entre l'extrémité de tuyau intérieur et l'extrémité de tuyau extérieure, est disposée une couche intermédiaire (3), qui présente au moins une épaisseur correspondant à la largeur d'intervalle (15) de l'espace annulaire (16) à l'état ultérieur d'achèvement du raccord de tuyaux,
c) calibrage commun des extrémités de tuyaux se chevauchant, à une largeur d'intervalle (15), correspondant à un montage à emboîtement, de l'espace annulaire (16),
d) enlèvement de la couche intermédiaire (3).

2. Procédé selon la revendication 1, caractérisé en ce que la couche intermédiaire (3) est sortie, par traction ou coulissement, hors de l'espace annulaire (16).

3. Procédé selon la revendication 2, caractérisé en ce que la couche intermédiaire (3) est réalisée en métal.

4. Procédé selon la revendication 1, caractérisé par un enlèvement de la couche intermédiaire (3), de manière qu'elle soit constituée d'un matériau qui, après calibrage, se transforme ou puisse être passé à un état liquide ou de volatilisation sous forme gazeuse ou de vapeur.

5. Procédé selon la revendication 4, caractérisé en ce que le passage à l'état de volatilisation s'effectue à la température ambiante.

6. Procédé selon la revendication 4, caractérisé en ce que le passage à l'état de volatilisation est provoqué par apport de chaleur.

7. Procédé selon la revendication 6, caractérisé en ce que la couche intermédiaire (3) est constituée d'un matériau pouvant brûler sans laisser de dépôt et chauffé à sa température d'inflammation par apport de chaleur.

8. Procédé selon la revendication 7, caractérisé en ce que la couche intermédiaire est un polyéthylène.

9. Procédé selon l'une des revendications 1-8, caractérisé en ce que la couche intermédiaire présente, sur ses faces frontales (4, 10) tournées en direction axiale, au moins une première butée (17), faisant saillie radicalement vers l'intérieur, et au moins une deuxième butée (18), faisant saillie radialement vers l'extérieur, la première butée (17) coopérant avec la face frontale (5) de l'extrémité de tuyau intérieur (6) et la deuxième butée (18) coopérant avec la face frontale (9) de l'extrémité de tuyau extérieure (8).

10. Procédé selon l'une des revendications 1-9, caractérisé en ce que la couche intermédiaire (3) présente, sur sa face extérieure, au moins un support d'espacement (19) sortant de la périphérie extérieure de l'extrémité de tuyau extérieure.

11. Procédé selon la revendication 10, caractérisé en ce Igue le support d'espacement (19) est constitué par la deuxième butée (18).

12. Procédé selon l'une des revendications 1-11, caractérisé en ce que, lors du calibrage commun, par un élargissement de l'extrémité de tuyau intérieur (6) ou rétrécissement de l'extrémité de tuyau extérieur (8), l'autre extrémité de tuyau respective est déformée conjointement dans la même direction.
